**Europäisches Patentamt**

**European Patent Office**

**Office européen des brevets**

(19)

(11) Veröffentlichungsnummer: **0 266 554**
**A2**

# (12) EUROPÄISCHE PATENTANMELDUNG

(21) Anmeldenummer: **87114261.8**

(22) Anmeldetag: **30.09.87**

(51) Int. Cl.⁴: **B29C 45/17**

(30) Priorität: **05.11.86 DE 3637613**

(43) Veröffentlichungstag der Anmeldung:
**11.05.88 Patentblatt 88/19**

(84) Benannte Vertragsstaaten:
**AT CH DE FR GB IT LI NL**

(71) Anmelder: **Hehl, Karl**
**Arthur-Hehl-Strasse 32**
**D-7298 Lossburg-1(DE)**

(72) Erfinder: **Hehl, Karl**
**Arthur-Hehl-Strasse 32**
**D-7298 Lossburg-1(DE)**

(74) Vertreter: **Mayer, Friedrich, Dr. et al**
**Patentanwälte Dr. Mayer & Frank Westliche 24**
**D-7530 Pforzheim(DE)**

(54) **Stationärer Formträger einer Kunststoff-Spritzgiessmaschine.**

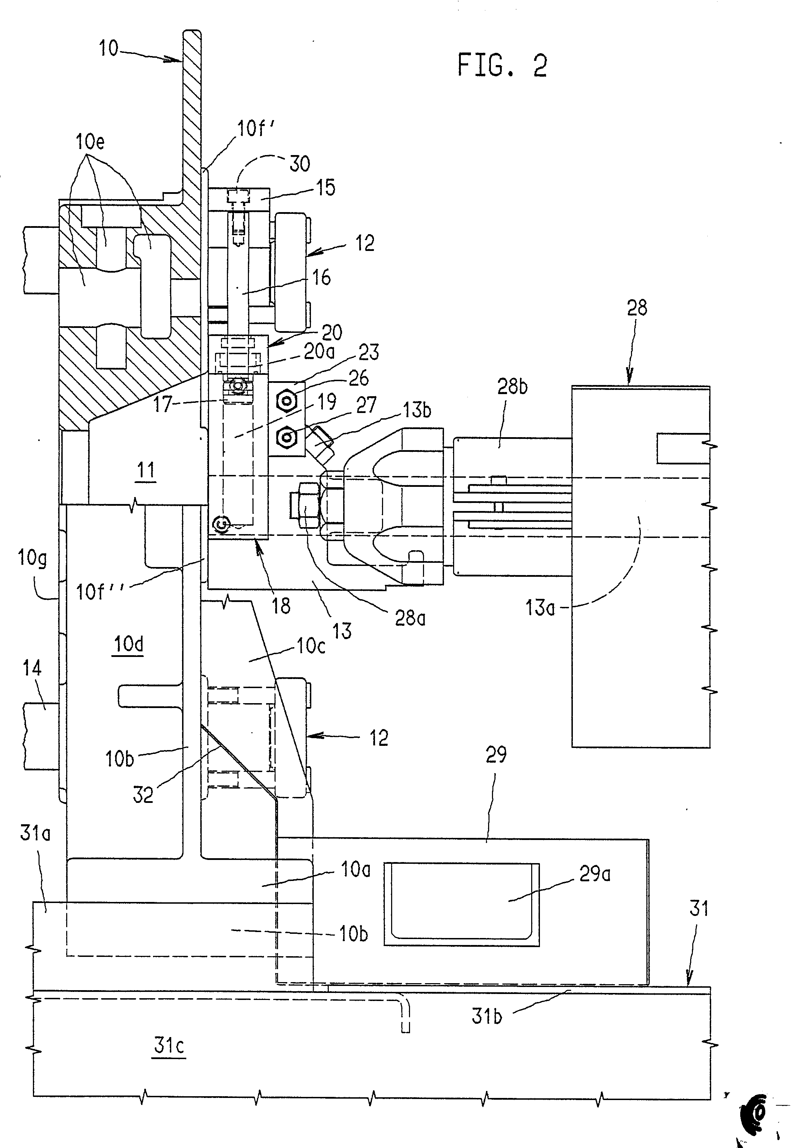

(57) Eine senkrecht zur Spritzachse des Plastifizierzylinders (28b) angeordnete Prallplatte (18) ist in rückseitigen, linearen Führungen des Formträgers (10) aus einer Ruheposition, in welcher die Prallplatte sich außerhalb der Bewegungsbahn des Plastifizierzylinders (28b) befindet in eine Prallposition verfahrbar, in welcher sie die Spritzachse des Plastifizierzylinders schneidet. Bei einer solchen Ausbildung können die beim Übergang auf einen neuen Kunststoff erforderlichen Reinigungsarbeiten am Plastifizierzylinder schneller, sauberer sowie mit geringerem Bedienungsaufwand durchgeführt werden. Zudem ist eine weitgehende Automatisierung der Überleitung des Spritzbetriebes auf den neuen Kunststoff möglich, indem der Reinigungsprozeß in programmfähige Schritte zerlegt wird, die dank der Prallplatte (18) den Schritten eines normalen Spritzzyklus ähneln (Fig. 2).

FIG. 2

EP 0 266 554 A2

Die Erfindung bezieht sich auf einen Formträger entsprechend dem Oberbegriff des Patentanspruches 1.

Bei einem bekannten Formträger dieser Art (US-PS 2,585,204) ist die in Sperrsposition steuerbare Platte zwischen der formträgerseitigen Oberfläche der stationären Formhälfte und der Aufspannfläche des Formträgers angeordnet. Die Platte ist aus ihrer Außenposition in Sperrposition mit Hilfe einer mechanisch arbeitenden Einrichtung verschiebbar, die in Abhängigkeit von der Öffnung der Spritzgießform arbeitet. Demzufolge wird die Platte bei jedem Spritzzyklus in Sperrstellung gesteuert, um die Düse des axial unbeweglichen Plastifizierzylinders zu schließen.

Wenn beim Spritzbetrieb der Kunststoff-Spritzgießmaschine nach Beendigung einer Fertigungsserie Spritzlinge aus einem Kunststoff herzustellen sind, der hinsichtlich seiner physikalischen Eigenschaften und/oder seiner Farbe von dem bisherigen Kunststoffmaterial abweicht, ergibt sich das Problem, den Plastifizierzylinder mit der Förderschnecke bei möglichst geringem Betriebszeitverlust von den in ihm verbliebenen Kunststoffresten zu befreien, bevor auf den Spritzbetrieb mit dem neuen Kunststoffmaterial übergegangen werden kann.

Üblicherweise wird dabei der Plastifizierzylinder von dem bislang benutzten Kunststoff 'leergespritzt' und danach das nunmehr zu benutzende Kunststoffmaterial eingeführt, wobei allerdings einige Spritzzyklen zu durchlaufen sind, um 'reine', das heißt brauchbare Spritzlinge zu erhalten. In vielen Fällen ist eine solches Verfahren jedoch nicht ausreichend, um den Plastifizierzylinder in einer tragbaren Zeit wirklich rein zu bekommen. Dies gilt insbesondere dann, wenn besonders hohe Anforderungen an die Qualität und somit auch an die Reinheit gestellt werden. In diesen Fällen ist es erforderlich, den Plastifizierzylinder mit einem Reinigungsmittel zu 'spülen'. Die erforderlichen Spülvorgänge bestehen darin, daß nach dem Leerspritzen des Plastifizierzylinders ein üblicherweise als 'Reinigungsmaterial' bezeichneter Kunststoff bzw. ein Kunststoffgemisch in den Plastifizierzylinder eingespeist wird, der bzw. das aufgrund seiner physikalischen Eigenschaften, insbesondere seiner Viskositätseigenschaften in einem breiten Temperaturbereich in besonderem Maße befähigt ist. Reste des bislang benutzten Kunststoffes aus dem Plastifizierzylinder und aus der Förderschnecke auszytreiben und der selbst im Gefolge der Benutzung des neuen Kunststoffes relativ leicht aus dem Plastifizierzylinder zu entfernen ist.

Der Erfindung liegt die Aufgabe zugrunde, einen Formträger der eingangs genannten Gattung derart weiterzubilden, daß die beim Übergang auf einen neuen Kunststoff erforderlichen Reinigungsarbeiten am Plastifizierzylinder schneller, sauberer sowie mit gereingerem Bedienungsaufwand durchgeführt werden können und eine Verschmutzung der Augußöffnung der Spritzgießfrom bzw. der Durchgriffsöffnung des Formträgers ausgeschlossen ist.

Diese Aufgabe word erfindungsgemäß durch die in Kennzeichen des Patentanspruches 1 genannten Merkmale gelöst.

In der älteren Patentanmeldung DE 36 30 416 A1 ist bereits eine Sperrplatte als Prallplatte zum Leerspritzen des Plastifizierzylinders vorgeschlagen worden. Die dabei vorgesehenen Merkmale reichen jedoch zu einer zufriedenstellenden Lösung des vorgenannten Problems nicht aus, weil eine Kühleinrichtung in der Sperrplatte nicht vorgesehen ist. Somit fehlt die Voraussetzung für eine schnelle und saubere Entsorgung im Gefolge einer plötzlichen Erstarrung des aus dem Plastifizierzylinder ausgespritzten Materials, das beim Auftreffen auf die gekühlte Oberfläche nach unten abfällt.

Insoweit ist die erfindungsgemäße Kombination der Merkmale gegenüber dem älteren Vorschlag als neue anzusehen.

Die erfindungsgemäße Ausbildung des Formträgers ermöglicht eine weitgehende Automatisierung der Überleitung des Spritzbetriebes auf einen anderen Kunststoff, indem der Reinigungsprozeß in programmfähige Schritte zerlegt wird, die dank der Prallplatte den Schritten eines normalen Spritzzyklus ähneln. Dabei können die bei offener Düse, also bei abgesetztem Plastifizierzylinder und bei rotierender Förderschnecke durchgeführten Spülvorgänge durch programmierte simulierte Spritzzyklen ergänzt und die Reinigung dadurch intensiviert und beschleunigt werden. Ein simmulierter Spritzzyklus in diesem Sinne besteht in einer der üblichen Plastifizierung beim normalen Spritzzyklus entsprechenden Plastifizierung des in Plastifizierzylinder eingeführten Reinigungsmittels und dessen anschließender Ausspritzung. Bei der Plastifizierung dient die Prallplatte als Widerlager für den aufgesetzten Plastifizierzylinder, so daß die rotierende Förderschnecke unter dem Staudruck des sich vor ihr ansammelnden plastischen Reinigungsmittels unter Überwindung eines hydraulischen Widerstandes zurückweicht. Beim nachfolgendem Ausspritzen des Reinigungsmittels aus dem vor der gekühlten Prallplatte abgesetzten Plastifizierzylinder fängt die Prallplatte das ausgespritzte heiße Reinigungsmittel auf, das erstarrt und von der Prallplatte abfällt.

Bei einer Ausbildung der Prallplatte gemäß Patentanspruch 3 kann diese die vorgenannten Funktionen dank der gehärteten Oberfläche ihrer Kühlscheibe besonders gut erfüllen.

Nachstehend wird die Erfindung anhand der Zeichnung an einem Au sführungsbeispiel erläutert.

Es zeigen:

Fig. 1 den auf dem Maschinenfuß der Kunststoff-Spritzgießmaschine befestigten Formträger in Seitenansicht mit düsenseitigem Endabschnitt des Plastifizierzylinders bei in Ruheposition befindlicher Prallplatte (Plastifizierzylinder in Anlage an der Spritzgießform),

Fig. 2, 3 die Anordnung gemäß Fig. 1 bei in Prallposition befindlicher Prallplatte (Plastifizierzylinder in maximaler Absetzposition bzw. in Anlage an der Prallplatte),

Fig. 4 den Formträger in Rückansicht bei in Sperrposition befindlicher Prallplatte (Plastifizierzylinder ist nicht dargestellt),

Fig. 5 die Prallplatte des Formträgers als solche mit zugehörigen Fahrzylindern und Trägerbalken in Stirnansicht,

Fig. 6 die Prallplatte gemäß Fig. 5 in Draufsicht und

Fig. 7 die Anordnung gemäß Fig. 5 in Seitenansicht.

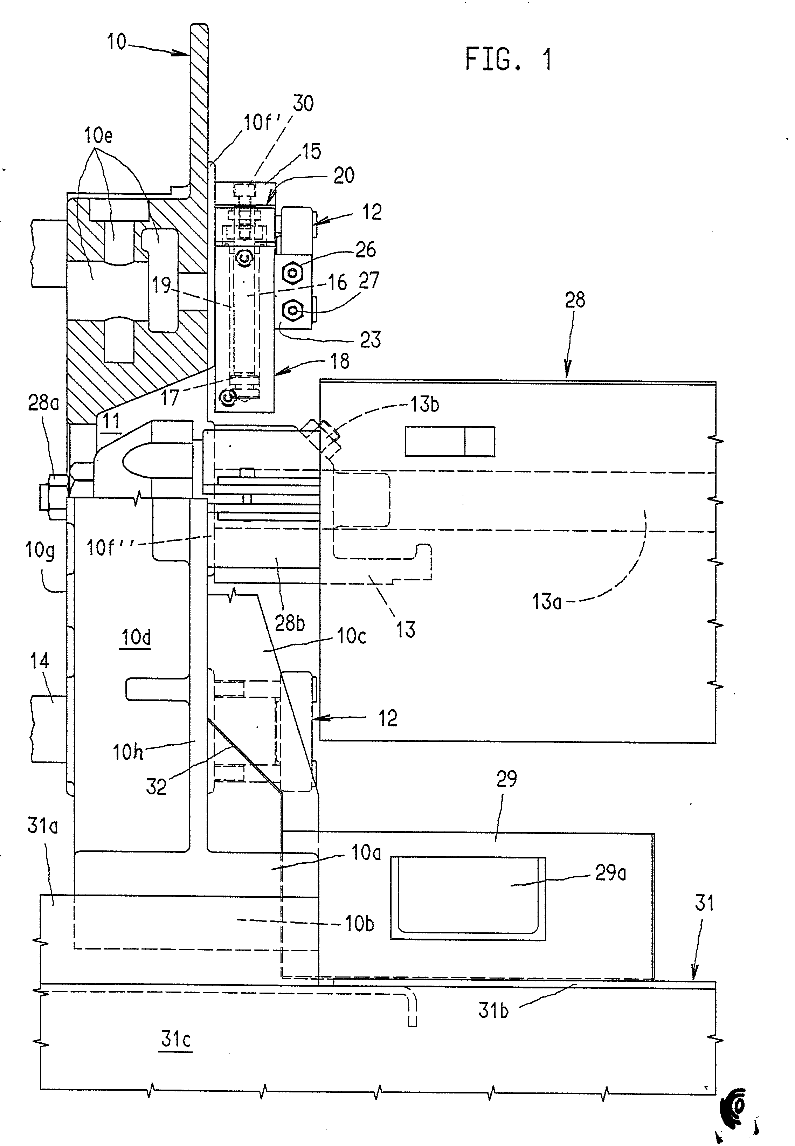

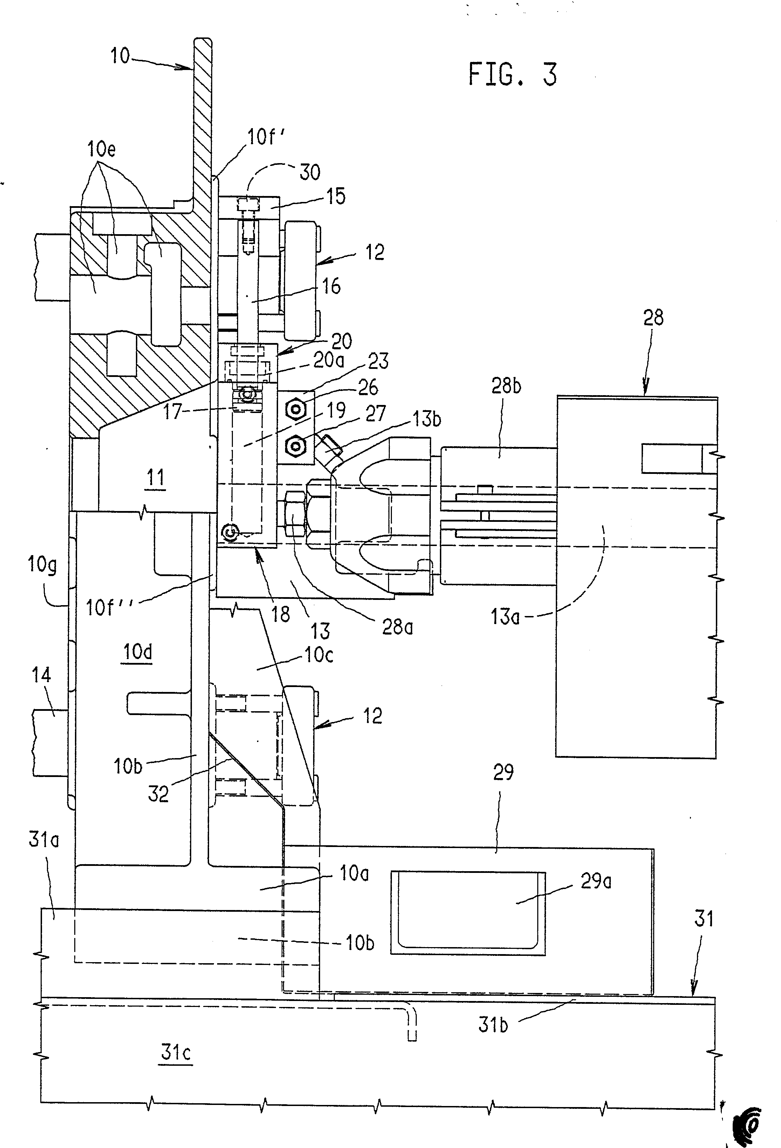

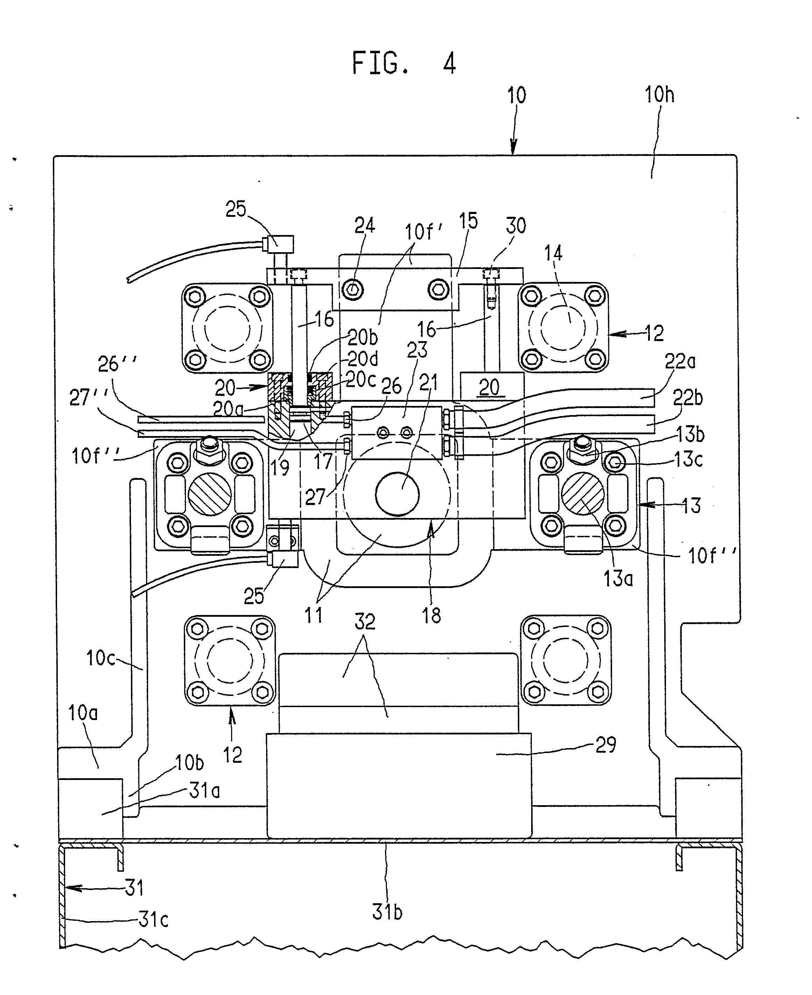

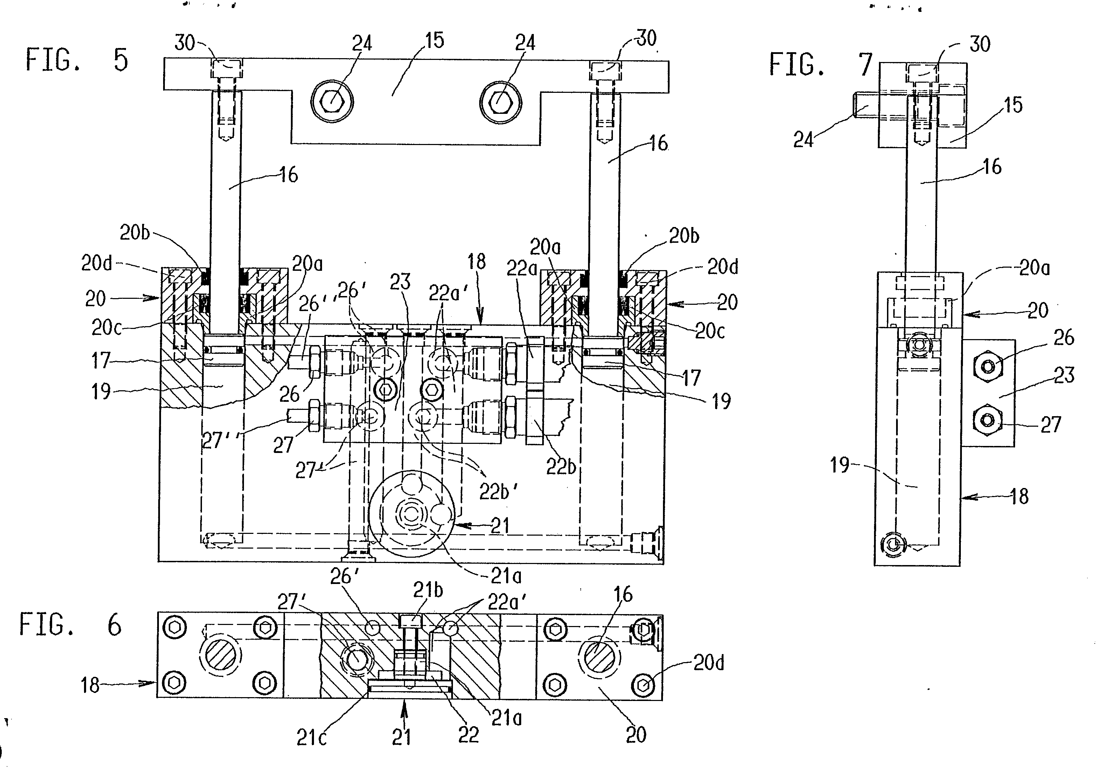

Der mit einer stirnseitigen Aufspannfläche 10g und einem breiten Schutzrand 10h am plattenförmigen Körper 10d versehene Formträger 10 liegt über horizontale Lagerrippen 10a auf zwei parallelen Auflageleisten 31a des Maschinenfußes 31c auf und ist an diesen mittels vertikaler Zentrierrippen 10b zentriert. In Ausnehmungen 10e des Körpers 10d sind Spannorgane zur Befastigung der benachbarten Gießformhälfte angeordnet (zeichnerisch nicht dargestellt). Säulen 14, auf welchen der bewegbare Formträger verschieblich gelagert ist, sind über Befestigungs-und Spannorgane 12 mit dem stationären Formträger 10 verbunden. Eine zentrale Durchtrittsöffnung 11 des stationären Formträgers 10 liegt konzentrisch zur Spitzachse des mit offener Düse 28a versehenen Plastifizierzylinders 28b einer Spritzgießeinheit 28. Diese ist auf Säulen 13a verfahrbar gelagert. Somit ist der Plastifizierzylinder 28b aus einer Position, in welcher er den stationären Formträger 10 durchgreift, in eine Absetzposition axial bewegbar, in welcher er sich im Abstand vom Formträger befindet. Wei aus Fig., 4 in Verbindung mit den Fign. 1-3 ersichtlich, weist der stationäre Formträger 10 rückseitig und oberhalb der Druchtrittsöffnung 11 eine erhabene Stützfläche 10f' von etwa rechtechigem Grundriß auf. Im oberen Abschnitte dieser Stützfläche f' ist ein Trägerbalken 15 mittels Schaubenbolzen 24 befestigt. Am Trägerbalken 15 hängen zwei symmetrisch zur Durchtrittsöffnung 11 angeordnete vertikale Kolbenstrangen 16. Diese sind mit Hilfe von koaxialen Schraubenbolzen 30 im Bereich flacher Endabschnitte des Trägerbalkens 15 mit diesem verschraubt. Die Kolben 17 der Kolbenstangen 16 bilden mit vertikalen Zylinderbohrungen 19 einer quaderförmig gestalteten Prallplatte 18 hydraulise Fahrzylinder 17,18. Die Prallplatte 18 ist aus eine Ruheposition, in welcher sie sich außerhalb der axialen Bewegungsbahn des Plastifizierzylinders 28b (befindet (Fig. 1) vertikal in eine Sperrposition verfahrbar, in welcher sie die Spritzachse a-a des Plastifierzylinders 28b schneidet. Die Zylinderbohrungen 19 der Prallplatte 18 mittels Zylinderdeckel 20 abgedeckt. In diesen sind konzentrische Zentrierbüchsen 20a angeordnet, welche mit axialen Zentrierflanschen in die Zylinderbohrungen 19 zentrierend eintauchen. Dabei sind die die Zylinderdeckel 20 durchgreifenden Kolbenstangen 16 je von einem Dichtring 20c der zugehörigen Zentrierbüchse 20a und einem Abstreifring 20b des Zylinderdeckels 20 umschlossen. In Ruheposition liegt die Prallplatte 18 an der Stützfläche f' des Formträgers 10 an. In Sperrposition ist die Prallplatte 18 oben an der Stützfläche f' und darüberhinaus an weiteren Stützflächen f″ abgestützt, welch letztere auf beiden Seiten der Durchtrittsöffnung 11 angeordnet sind, wie insbesondere aus Fig. 4 ersichtlich. Dabei dienen diese seitlichen Stützflächen f″ in ihren äußeren Bereichen als Befestigungsflächen für die beiden Anschlußeinrichtungen 13 für die Säulen 13a der Spritzgießeinheit 28. Dabei ist je eine die zugehörige Säule 13a in einer zentralen Bohrung aufnehmendes Anschlußstück mittels Befestigungsschrauben 13c an der Stützfläche 10f″ angeschlossen. Die Säule 13a ist mittels einer schrägen Sperrschraube 13b in der Anschlußbohrung des Anschlußstückes gesichert. Die in Sperrposition die Durchgriffsöffnung 11 abdeckende Prallplatte 18 weist im Bereich der Spritzachse a-a eine stirnseitig gehärtete Kühlscheibe 21 auf, die mit der Prallfläche der Prallplatte 18 bündig ist. Die Kühlscheibe 21 begrenzt rückseitig einen von einer Kühlflüssigkeit, vorzugsweise von Kühlwasser durchflossenen Kühlraum 22 der Prallplatte 18. Demzufolge kann der Plastifizierzylinder 28b mit seiner Düse 28a in ähnlicher Weise auf die gehärtete Stirnfläche der Kühlscheibe 21 der Prallplatte 18 aufgesetzt werden, wie beim normalen Spritzbetrieb auf den Auguß der Spritzgießform. Eine das Drucköl für die Fahrzylinder 17, 18 sowie die Kühlflüssigkeit für den Kühlraum 22 zu-und abführende Anschlußplatte 23 ist an der Prallplatte 18 stirnseitig und symmetrisch zu ihrer vertikalen Symmetrieebene befestigt. Seitliche Anschlüsse 22a, 22b für den Kühlflüssigkeitsrücklauf und den Kühlflüssigkeitszulauf stehen über vertikale Kanäle 22a′, 22b′ der Prallplatte 18 mit dem Kühlraum 22 in Verbindung. Letzteres ist insbesondere aus den Fign. 5 und 6 ersichtlich. Auf der anderen Seite der Anschlußplatte 23 sind Auschlüsse 26, 27 für das Drucköl angeordnet, die über vertikale Kanäle 26', 27' der Prallplatte 18 mit den oberen und unteren Zylinderräumen der Fahrzylinder 17, 18 in Verbindung stehen. Diese oberen und unteren Zylinderräume kommunizieren je miteinander über horizontale Verbindungsbohrungen in der Prallplatte. Eine das Drucköl wechselweise auf unterschiedliche Fließrichtung steuernder Hydraulikschieber (zeichnerisch nicht dargestellt) steht über flexible Leitungen 26", 27" mit den Anschlüssen 26, 27 der Anschlußplatte 23 in Verbindung. Wie insbesondere aus den Fign. 1-3 erkennbar, sind die horizontalen Lagerrippen 10a des stationären Formträgers sowie auch die zugehörigen Zentrierrippen 10b is Richtung after Spritzießeinheit beträchtlich verlängert und in den verlängerten Abschnitten mit Hilfe rückseitiger Versteifungsrippen 10c am Körper 10d abgestützt. Eine vertikale Parallelprojektion der Prallplatte 18 liegt vollständig innerhalb der genannten Verlängerungen der horizontalen Lagerrippen 10a. Wie insbesondere aus Fig. 4 ersichtlich, ist der Maschinenfuß 31 im Bereich unter der Spritzgießeinheit 28 mit Hilfe eines Deckels 31b abgedeckt. Unter der oberflächenbearbeiteten Prallfläche der beispielsweise aus einer Stahlplatte oder einem.

Gußstück gefertigten Prallplatte 18 ist ein Leitblech 32 mit einer Gleitfläche angeordnet, die in einem auf dem Deckel 31 abgestellten Behälter 29 mit Griffmulde 29a mündet. Mit Hilfe des Leitbleches 32 gelangt das von der Sperrfläche der Prallplatte 18 abfallende Kunststoffmaterial in den Behälter 29, der zur Entleerung senkrecht zur Spritzachse a-a in Richtung der Bedienungsseite der Kunststoff-Spritzgießmaschine aus dieser herausgenommen werden kann.

Im Bedarfsfalle kann das Leitblech 32 durch ein anders gestaltetes Leitblech ersetzt werden (zeichnerisch nicht dargestellt), über welches das von der Sperrfläche abfallende Kunststoffmaterial in eine Zerkleinerungseinrichtung gelangen läßt, welche im Maschinenfuß 31-mit bedienungsseitiger Wand 31c-etwa unterhalb der Trennebene der Spritzgießform angeordnet ist.

Welche Reinigungsschritte und wie viele der erforderlich Reinigungsprozeß beim Übergang von einem Kunststoff auf den anderen erforderlich bzw. in das Programm des Rechners aufzunehmen sind, hängt wesentlich von den physikalischen Eigenschaften und Verarbeitungsparametern des durch einen neuen Kunststoff zu ersetzenden Kunststoffmaterials oder genauer gesprochen davon ab, wie - schwer oder leicht die Reste des alten Kunststoffes aus dem Plastifizierungszylinder auszutreiben und welche Ansprüche an den Reinheitsgrad der neuen Spritzlinge zu stellen sind. In aller Regel wird dieser Reinigungsprozeß nach dem 'Leerspritzen' des Plastifizierzylinders 28b einen 'Spülvorgang' mit einem Reinigungsmittel umfassen. Bei einem solchen 'Spülvorgang' rotiert die Förderschnecke in einer Position gemäß Fig. 2, also bei offener Düse 28a bei in Prallposition befindlicher Prallplatte 18 und treibt dabei eventuelle Reste des alten Kunststoffes aus dem Plastifizierzylinder 28a aus. Ferner wird der Reinigungsprozeß meist einen "simulierten Spritzzyklus" (vergleiche hierzu Beschreibungseinleitung) umfassen, bei welchem der Plastifizierzylinder 28a auf der Prallplatte 18 aufgesetzt ist, die insoweit die Spritzgießform als Widerlager simuliert. Dank dieser Anlage weicht die rotierende Förderschnecke unter dem Staudruck des sich vor ihr ansammelnden plastischen Reinigungsmittels unter Überwindung eines hydraulischen Widerstandes zurück. Die Viskosität des plastischen Reinigungsmittels ist in aller Regel so groß, daß beim nachfolgenden Absetzen des Plastifizierzylinders von der Prallplatte 18 dieses Reinigungsmittels aus der offenen Düse nicht austritt. Nach dem Absetzen wird das Reinigungsmittel durch einen Axialhub der Förderschnecke aus dem Plastifizierzylinder ausgespritzt. Dabei fängt die Prallplatte 18 das ausgespritzte heiße Reinigungsmittel auf, das erstarrt und von der Prallplatte 18 abfällt.

Danach kann eindem beschriebenen simulierten, mit einem Reinungsmittel durchgeführten Spritzzyklus entsprechender 'similierter Spritzzyklus' mit dem neuen Kunststoff durchgeführt werden. Am Ende des Reinigungsprozesses wird in aller Regel der erste produktive Betriebs-Spritzzyklus dadurch vorbereitet, daß der neue Kunststoff unter Anlage des Plastifizierzylinders an der Prallplatte plastifiziert (vorplastifiziert) und dabei für den neuen Spritzling dosiert wird. In diesem Sinne wird das entgegen einem hydraulischen Widerstand erfolgende Zurückweichen der rotierenden Förderschnecke nach Programm in einem Zeitpunkt beendet, in welchem sich ein dem neuen Spritzling entsprechendes Quantum an Kunststoff vor der Förderschnecke angesammelt hat. Vor dem darauf erforgenden Absetzen des Plastifizierzylinders 28b von der Prallplatte 18 wird der Staudruck im Plastifizierzylinder durch einen sogenannten 'Entspannungshub' beseitigt, bei welchem die Förderschnecke geringfügig zerückgezogen wird, so daß aus der offenen Düse 28a kein Kunststoff austritt. Danach wird die Prallplatte 18 in Ruheposition gefahren und der Plastifizierzylinder auf die Spritzgießform zur Fortführung des Spritzzyklus aufgesetzt.

## Ansprüche

1. Stationärer Formträger (10) einer auf dem Maschinenfuß (31) einer Kunststoff-Spritzgießmaschine abgestützten Formschließeinheit, der eine Durchgriffsöffnung (11) für den Plastifizierzylinder (28b) einer Spritzgießeinheit (28) aufweist, welche Durchgriffsöffnung (11) von der Düse des Einspritzposition befindlichen Plastifizierzylinders (28) durchgriffen ist,
mit einer senkrecht zur Spritzachse des Plastifizierzylinders (28b) angeordneten Platte, die in Führungen des Formträgers (10) aus einer Außenposition, in welcher sie sich außerhalb der Spritzachse des Plastifizierzylinders (28b) befindet, in einer vertikalen Ebene in eine Sperrposition steuerbar ist, in welcher sie die Spritzachse - schneidet,
dadurch gekennzeichnet, daß die Platte als Prallplatte (18) auf der Rückseite des Formträgers (10) in linearen Führungen angeordnet ist und einen von einer Kühlflüssigkeit durchflossenen Kühlraum (22) aufweist, der sich bei in Sperrposition befindlichen Prallplatte (18) im Bereich der Spritzachse des Plastifizierzylinders (28b) befindet, der aus seiner Einspritzposition axial in eine Absetzposition bewegbar ist, in welcher sich seine Düse (28a) im Abstand vom Formträger (10) befindet.

2. Formträger nach Patentanspruch 1, dadurch gekennzeichnet, daß die Prallplatte (18) an vertikalen Kolbenstangen (16) geführt ist, die mittels eines Trägerbalkens (15) am stationären Formträger (10) befestigt sind und daß die Kolben (17) der Kolbenstangen (16) mit vertikalen Zylinderbohrungen (19) in der Prallplatte (18) hydraulische Fahrzylinder (17, 18) bilden.

3. Formträger nach Patentanspruch 1 oder 2, dadurch gekennzeichnet, daß die in Sperrposition die Durchgriffsöffnung (11) abdeckende Prallplatte (18) eine stirnseitig gehärtete, mit der Prallfläche der Prallplatte (18) bündige Kühlscheibe (21) aufweist, die den Kühlraum (22) rückseitig begrenzt.

4. Formträger nach einem der Patentansprüche 2 oder 3, dadurch gekennzeichnet, daß die quaderförmig gestaltete Prallplatte (18) in Sperrposition an erhabenen Stützflächen (f', f") des Formträgers (10) anleigt, die teilweise als Befestigungsflächen für den Trägerbalken (15) und die Anschlußeinrichtungen (13) für die Säülen (13a) der Spritzgließ einheit (28) dienen.

5. Formträger nach einem der Patentsprüche 2 bis 4 dadurch gekennzeichnet, daß die Zylinderbohrungen (19) mittels Zylinderdeckel (20) abgedeckt und in diesen Zentrierbüchsen (20a) angeordnet sind, welche mit axialen Zentrierflanschen in die Zylinderbohrungen (19) zentrierend eintauchen, wobei die die Zylinderdeckel (20) durchgreifenden Kolbenstanten (16) je von einem Dichtring

(20c) der zugehörigen Zentrierbüchse (20a) und einem Abstreifring (20b) des Zylinderdeckels (20) umschlossen sind.

6. Formträger nach einem der Patentansprüche 2 bis 5, dadurch gekennzeichnet, daß eine das Drucköl für die Fahrzylinder (17, 18) und die Kühlflüssigkeit für den Kühlraum (22) zu-und abführende Anschlußplatte (23) stirnseitig an der Prallplatte (18) befestigt ist.

7. Formträger nach Patentanspruch 6, dadurch gekennzeichnet, daß seitliche Anschlüsse (2a, 22b) für den Kühlflüssigkeitsrücklauf und den Kühlflüssigkeitszulauf über vertikale Kanäle (22a'; 22b') der Prallplatte (18) mit dem Kühlraum (22) in Verbindung stehen.

8. Formträger nach Patentanspruch 6 oder 7, dadurch gekennzeichnet, daß seitliche Anschlüsse (26, 27) der Anschlußplatte (23) für das Drucköl über vertikale Kanäle (26, 27) der Prallplatte (18) mit den je miteinander kommunizierenden oberen und untern Zylinderräumen der Fahrzylinder (17, 18) in Verbindung stehen.

9. Formträger nach einem der Patentansprüche 6 bis 8, dadurch gekennzeichnet, daß ein das Drucköl wechselweise auf unterschiedliche Fließrichtung steuernder Hydraulikschieber über flexible Leitungen (26", 27") mit den Anschlüssen (26, 27) der Anschlußplatte (23) in Verbindung steht.

10. Formträger nach einem der vorhergehenden Patentansprüche, dadurch gekennzeichnet, daß unter der oberflächenbearbeiteten Prallfläche und der aus einer Stahlplatte oder einem Gußstück gefertigten Prallplatte (18) ein in einem Behälter (29) und/oder ein in eine Zerkleinerungseinrichtung mündendes Leitblech (32) vorgesehen ist.

FIG. 1

FIG. 2

0 266 554

FIG. 3

# FIG. 4

FIG. 5

FIG. 7

FIG. 6

0 266 554